# EUROPÄISCHE PATENTSCHRIFT

(11) **EP 1 328 389 B1**
(45) Veröffentlichungstag und Bekanntmachung des Hinweises auf die Patenterteilung: **05.07.2006**
(21) Anmeldenummer: 01978448.7
(22) Anmeldetag: 23.10.2001
(51) Int. Cl.: B29C 45/00, B29C 45/28

(54) **VERFAHREN UND ANLAGE ZUR VERARBEITUNG THERMOPLASTISCHER KUNSTSTOFFE**
METHOD AND INSTALLATION FOR PROCESSING THERMOPLASTIC SYNTHETIC MATERIALS
PROCEDE ET INSTALLATION DE TRAITEMENT DE MATIERES THERMOPLASTIQUES

(30) Priorität: 24.10.2000 DE 10052841
(43) Veröffentlichungstag der Anmeldung: 23.07.2003
(73) Patentinhaber: Merck Patent GmbH, 64293 Darmstadt (DE)
(72) Erfinder: EDLER, Gerhard, 65468 Trebur (DE); KEIM, Hans-Joachim, 70193 Stuttgarg (DE)
(74) Vertreter: Schuster, Müller & Partner
(86) Internationale Anmeldenummer: PCT/EP2001/012211
(87) Internationale Veröffentlichungsnummer: WO 2002/034495

(56) Entgegenhaltungen:
- EP-A- 0 339 184
- EP-A- 0 362 648
- EP-A- 0 442 255
- EP-A- 0 508 732
- EP-A- 0 573 232
- DE-A- 10 103 821
- US-A- 5 538 413
- US-A- 5 556 582
- US-A- 5 766 654
- PATENT ABSTRACTS OF JAPAN vol. 1995, no. 01, 28. Februar 1995 (1995-02-28) & JP 06 285911 A (MITSUBISHI RAYON CO LTD), 11. Oktober 1994 (1994-10-11)
- PATENT ABSTRACTS OF JAPAN vol. 018, no. 572 (M-1696), 2. November 1994 (1994-11-02) & JP 06 210669 A (TOYOTA MOTOR CORP), 2. August 1994 (1994-08-02)

## Beschreibung

### Stand der Technik

Die Erfindung geht aus von einem Verfahren bzw. einer Anlage zur Verarbeitung thermoplastischer Kunststoffe nach der Gattung des Hauptanspruchs bzw. des Nebenanspruchs 4. Derartige Verfahren bzw. entsprechende Verarbeitungsanlagen sind in vielfältiger Weise bekannt, beispielsweise für den Spritzguss von thermoplastischen Kunststoffen. Statt durch Spritzgießen kann die Schmelze aber auch durch Extrusion oder andere Verfahren verarbeitet werden. Maßgebend für die Erfindung ist, dass durch die Verarbeitung mindestens eine Bindenaht an der Stelle entsteht, an der zwei Schmelzestränge oder dergleichen zusammenstoßen und sich mit einander verbinden, so lange die Schmelze aufgrund ausreichender Temperatur dies ermöglicht. Grundsätzlich stellt die Verbindung von Kunststoffsträngen, die über mehrere Düsen in eine Form gepresst werden, ein Problem für einerseits das miteinander Verbinden der Stränge und andererseits der tatsächlichen Ausfüllung der Spritzform dar. So ist es bekannt, durch Pressen des einfließenden bzw. bereits eingespritzten Kunststoffs während und/oder nach dem Einspritzvorgang solche Nachteile zu vermeiden (DE OS 3717609; US 5,538,413; US 5,766,654). Die Praxis hat jedoch gezeigt, dass durch Erhöhung des Druckes zwar leichte Verbesserungen erzielbar sind, aber das Problem als solches nicht gelöst wurde.

Das Problem bei all diesen bekannten Verfahren bzw. ein Mangel der bekannten Verarbeitungsanlagen besteht darin, dass am endgültigen Produkt an den Fügungsstellen der Schmelzestränge oder der Stoßstellen, nämlich an den Bindenähten, sowohl optisch als auch in Bezug auf Festigkeit Schwachstellen verbleiben können.

Um dieses Problem zu lösen, hat man bereits versucht, die Schmelzestränge mindestens abschnittsweise in Schwingung bzw. Pulsation zu versetzen, um aufgrund von Schwingungsunterschieden ein Durchdringen der Schmelzen im Bereich der Bindenähte zu erzielen. So ist eine Spritzgießinrichtung zur Vermeidung von Nahtlinien bekannt, bei der einstellbare Ventile während des Prozesses die Zufuhrkanäle zum Formhohlraum im Wechsel ansteuern. Die Form wird demzufolge im zeitverschobenen Wechsel mit Schmelze versorgt, wodurch sich auch die Berührungslinie der beiden Schmelzeströme in der Form verschiebt, so dass eine vollständige Verbindung und einheitliche Festigkeitsstruktur im Nahtbereich gewährleistet ist (JP 6210669 A).

Bei einer anderen Lösung wird die Bildung von Bindenähten dadurch vermieden, dass während des Füllvorgangs die Fließrichtung mindestens eines der Schmelzeströme im Bereich der sich bildenden Bindenaht mindestens einmal verändert wird, wodurch die Fließnahtfläche über ihre Höhe eine Krümmung erfährt. Diese wechselweise Änderung der Fließrichtung der Schmelzeströme lässt sich durch die wechselweise Änderung der Volumen der Schmelzeströme, beispielsweise durch deren periodisches Drosseln, erzielen (EP 0 362 648 A2). Eine alternierende Füllung von Formhohlräumen und damit ein Oszillieren der Formmasse wird auch durch die Einrichtung und das Verfahren zum Gießen von Plastteilen gem. EP 0 442 255 A2 angestrebt.

Trotz der Anwendung des all diesen technischen Lösungen zugrunde liegenden o. g. Lösungsansatzes, wird bei bestimmten Anwendungsfällen noch kein zufrieden stellendes Ergebnis erzielt. Bei der Verarbeitung von Hochleistungswerkstoffen, beispielsweise LCP, die sehr kurze Füll- und Zykluszeiten erfordern, ist das langsame, evtl. im Sekundentakt erfolgende versetzte Einspritzen in die Form nicht mehr ausreichend. Hier sind deutlich höhere Frequenzen erforderlich. Ein optischer Nachteil entsteht vor allem immer auch dann, wenn die Schmelzen mit Füllstoffen oder Pigmenten versehen sind. Trotz guter Mischung der Materialien entstehen durch das Fließen und insbesondere durch Trennung der Schmelzeströme Ungleichmäßigkeiten und Desorientierungen der Polymermoleküle und der Pigmente, die dann als Bindenaht deutlich erkennbar sind, nämlich als Stoßstelle der Stränge. Bei entsprechenden Belastungen entstehen Bruchstellen, bevorzugt in diesen Bindenähten, wobei die Schwächung des Produkts aufgrund der Bindenähte je nach Verarbeitungsverfahren bis zu 60 % der tatsächlichen Materialfestigkeit ausmachen kann und zwar bei ordentlicher Verarbeitung, d.h. ausreichender Schmelzetemperatur an den Fügungsstellen.

Es ist auch bekannt, ähnlich einem Scorring-Verfahren, das Kunststoffmaterial in der Form hin- und her zu schieben. Ein Spritzgießventil regelt die Dynamik des Eintritts des Formmassestroms in eine Form. Zur Messung der Prozessbedingungen während der Formteilbildung ist ein Sensor vorgesehen (US 5,556 582). Aufgrund der natürlichen Trägheit des Materials und der gegebenen verhältnismäßig hohen Drücke ist es allerdings nicht möglich, über die magnetisch gesteuerten Spritzventile die erforderliche Frequenz zu erzielen. Auch wenn theoretisch hohe Frequenzen mit Magnetventilen erreichbar scheinen, so ist doch nicht gewährleistet, dass diese Nadelventile tatsächlich geöffnet haben. Es entsteht eine Art Kaskadeneinspritzung, aber kein Schwingen der Kunststoffstränge mit dem angestrebten Hintergreifen der Moleküle usw..

### Die Erfindung und ihre Vorteile

Das erfindungsgemäße Verfahren bzw. die erfindungsgemäße Verarbeitungsanlage zur Verarbeitung von schmelzbaren Materialien wie thermoplastischer Kunststoffe odgl. mit den kennzeichnenden Merkmalen des Hauptanspruchs bzw. des Nebenanspruchs 4 weist demgegenüber den Vorteil auf, dass aufgrund der mechanischen Synchronisation der Einspritzventile eine hohe Frequenz der Schwingung bzw. Pulsation der Schmelzestränge auf technisch einfache Weise erzielt wird. Während bei der Erfindung beispielsweise Schwingungen von 60 Hz erreichbar sind, dürfte bei pneumatisch-hydraulisch- oder magnetisch betätigten Nadelventilen das Erreichen einer Schwingung von 1 Hz schon problematisch sein.

Durch die Schwingung oder Pulsation mit Frequenzen oberhalb 1 Hz entstehen Relativbewegung der zwei aneinanderliegenden Schmelzestränge zueinander, die ein tieferes Ineinanderdringen der Schmelze an diesen Bindenähten ermöglichen, wodurch einerseits die Bindenähte weniger sichtbar sind bzw. optisch ganz verschwinden und andererseits eine erhebliche Verbesserung der Festigkeit im Bindenahtbereich entsteht. Aufgrund des in Schwingung versetzten Materials greifen und verhaken die Moleküle der Schmelze der einander zugeordneten Stränge ineinander, wodurch eine innige Verbindung gebildet wird.

Es ist zwar bekannt, Elastomermassen in Hochfrequenzschwingung zu versetzen, um dadurch ein besseres Fließverhalten zu erzielen (DE OS 19830296), ohne jedoch eine solche Schwingungsbeaufschlagung im erfindungsgemäßen Sinne zu verwenden. Auch das Einsetzen von niederfrequenten Schwingungen innerhalb der Form bei Mehrkomponentenkunststoffen um eine gute, homogene Verbindung zu erreichen ist bekannt (DE GM 7124435), ohne die durch die Erfindung erzielte Lösung zu erreichen.

Die Frequenz der Schwingungen der einander zugeordneten Schmelzestränge oder dergleichen kann etwa gleich groß sein, wobei aber die jeweilig zugeteilten Schwingungen derselben seitlich gegeneinander versetzt sind. Natürlich muss der Versatz so sein, dass die Schwingungen nicht wieder ineinander fallen, sondern die oben beschriebene pulsierende Wirkung an der Fügungsstelle entsteht, die zu der Verzahnung der Bindenähte führt. Wird beispielsweise der Schmelzefluss über zwei Düsen aufgeteilt, so kann dieser Versatz davon abhängen, wie weit die jeweilige Düse vom Fügungspunkt entfernt ist. Um eine Verzahnung der Nähte zu erreichen, kann die Schwingung von der Schmelze ausgehen, sie kann aber auch von der Spritzform, der Düse und/oder dem Formkern ausgehen.

Nach einer zusätzlichen Ausgestaltung der Erfindung sind die Amplituden der Schwingungen der zugeordneten Schmelzestränge oder dergleichen gleich. Hierdurch wird erreicht, dass der Versatz von Schwingungstälern und -bäuchen während der Verarbeitung gleich bleibt.

Nach einer zusätzlichen Ausgestaltung der Erfindung wird die Schmelze intermittierend und über mindestens zwei abwechselnd öffnende Düsen in eine die Formteile bestimmende Form eingespritzt.

Nach einer diesbezüglichen zusätzlichen Ausgestaltung der Erfindung sind die Spritzdüsen gesteuert schließbar bzw. zu öffnen, wobei die Aufsteuerzeiten in Bezug auf den Zeitpunkt der Berührung der Schmelzenstränge zueinander versetzt sind.

Eine besondere Ausgestaltung der Erfindung richtet sich auf die Anwendung des Verfahrens auf pigmentierte und/oder Füllstoffformkörper enthaltende Schmelzen. So ist beispielsweise ein Verfahren bekannt (DE-OS 197 10 610), bei dem derartige Kunststoffe mit Hilfe des Spritzgießverfahrens verarbeitet werden, wobei die Ausgangsstoffe vor dem Schmelzen intensiv miteinander vermischt werden. Bei diesen Ausgangsstoffen handelt es sich einerseits um Pigmente oder Füllstoffe beispielsweise plättchen-oder nadelförmige Pigmente, Glasfasern oder dergleichen und andererseits um ein meist als Granulat vorhandenes Polymer, wobei diese Stoffe mechanisch miteinander gemischt werden, bevor sie beispielsweise in der Spritzgießmaschine aufgeschmolzen oder verarbeitet werden. Besonders bei Pigmenten oder Füllstoffen mit großem Aspektverhältnis zwischen Länge, Breite und Dicke wie z.B. Plättchen besteht die Gefahr der gestörten oder ungünstigen Ausrichtung im Bindenahtbereich, so dass die Bindenaht optisch hervortritt. Aufgrund des erfindungsgemäßen Verfahrens wird im Bereich der Bindenaht eine Orientierung der Pigmente und Füllstoffe in der Richtung wie im übrigen Formteil zwangsweise herbeigeführt, so dass nach der Verarbeitung der Schmelze keine Veränderung der Ausrichtung erkennbar ist.

Nach einer vorteilhaften Ausgestaltung des Nebenanspruchs 4 sind zur Synchronisierung ihrer Schaltposition die Spritzventile durch einen mechanischen Steuermechanismus miteinander verbunden. So ist eine Steuerung der Ventilnadeln, beispielsweise über Kurvenscheiben, Pumpendruck und dergleichen denkbar.

Nach einer zusätzlichen Ausgestaltung der Erfindung arbeiten die Ventile je mit einem Drehschieber, welcher je nach Drehlage auf und/oder zu steuert. Bekannt sind Nadelverschlussdüsen (DE-PS 391 0025), bei denen die Ventilnadel gegen Federkraft öffnet.

Nach einer diesbezüglichen zusätzlichen Ausgestaltung der Erfindung sind die einzelnen Drehschieber der Ventile untereinander drehsynchronisiert.

Nach einer zusätzlichen diesbezüglichen Ausgestaltung der Erfindung erfolgt die Drehsynchronisation über ein an den Drehschiebern angreifendes Zahngetriebe.

Nach einer zusätzlichen Ausgestaltung der Erfindung werden die Drehschieber über einen Motor rotierend angetrieben.

Nach einer zusätzlichen Ausgestaltung der Erfindung sind auf den Drehschiebern zur Steuerung des Schmelzestrangs Schrägnuten angeordnet, welche mit Bohrungen im Ventilgehäuse für die Schmelzeförderung zusammenwirken.

Weitere Vorteile und vorteilhafte Ausgestaltungen der Erfindung sind der nachfolgenden Beschreibung, der Zeichnung und den Ansprüchen entnehmbar.

### Zeichnung

Zwei Ausführungsbeispiele des Gegenstandes der Erfindung sind in der Zeichnung dargestellt und im folgenden näher beschrieben. Es zeigen:
- Figur 1: das erste Ausführungsbeispiel stark vereinfacht dargestellt mit Schrägkantensteuerung und
- Figur 2: das zweite Ausführungsbeispiel im Längsschnitt und mit zwei Drehschiebern.

### Beschreibung des Ausführungsbeispiels

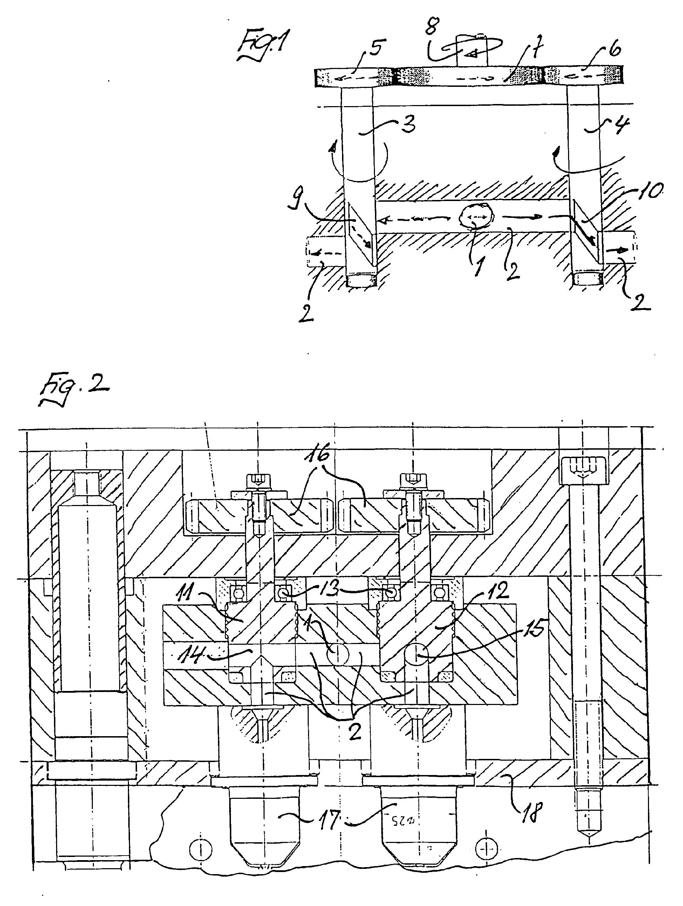

Wie in Figur 1 stark vereinfacht angedeutet, wird in einer Spritzgießmaschine nahe der nicht gezeigten Spritzform Kunststoffschmelze über einen Druckkanal 1, in einen Verteilerkanal 2 gefördert, welcher durch zwei Ventilnadeln 3 und 4 gesteuert wird. Dieser Verteilerkanal 2 führt zu nicht dargestellten Spritzdüsen, welche in die Spritzform münden. Der Vordruck der Kunststoffschmelze im Druckkanal 1 wird durch ebenfalls nicht dargestellte Mittel beispielsweise eine dem Aufschmelzbereich der Maschine nachgeschaltete Schnecke. Die Ventilnadel 3 und 4 werden durch Zahnräder 5 und 6 gleichsinnig und mit gleicher Drehzahl angetrieben, wofür ein zwischengeschaltetes Zahnrad 7 dient, dessen Welle 8 über einen nicht dargestellten Motor angetrieben wird. Auf den Mantelflächen der Ventilnadeln 3 und 4 sind Schrägringnuten 9 und 10 angeordnet, (über die Verteilerkanal 2 unmittelbar gesteuert wird. Die Zuordnung der Schrägringnuten 9 und 10 ist derart gewählt, dass immer dann, wenn eine der Schrägringnuten den Verteilerkanal 2 sperrt, die andere ihn gerade aufsteuert. Bei der dargestellten Stellung sperrt die Ventilnadel 3 mit Schrägringnut 9 gerade den Verteilerkanal 2 während die Ventilnadel 4 mit Schrägringnut 10 ihn aufsteuert. Konstruktionsbedingt gibt es für das Auf- und Zusteuern einen Übergangsbereich. Da die nicht dargestellten Düsen in die gleiche Form münden und die Schmelzestränge durch die Ventilnadeln laufend unterbrochen und wieder geöffnet werden, erfahren die Schmelzestränge eine pulsierende Förderung, wobei die Pulse für die beiden Stränge abwechselnd sind, so dass innerhalb der Form und beim Aufeinandertreffen der Schmelzestränge ein pulsierendes oder vibrierendes bzw. schwingendes Mit- und Gegeneinander der Schmelzestränge stattfindet, wodurch eine Durchdringung und Verbindung der Bindenähte, die stets beim Aufeinandertreffen von Schmelzeströmen entstehen, stattfindet.

Bei dem in Figur 2 dargestellten zweiten Ausführungsbeispiel sind ebenfalls zwei Ventile vorgesehen, die den Verteilerkanal 2 steuern, aber mit Hilfe von Drehschiebern 11 und 12. Diese Drehschieber sind zusätzlich auf Wälzlagern 13 gelagert und weisen T-förmige Steuerkanäle 14 und 15 auf, die radial ihre Eingänge haben aber axial den Ausgang. Diese Drehschieber 11 und 12 werden durch Zahnräder 16 angetrieben, so dass immer wenn ein Drehschieber 11 oder 12 sein Ventil schließt, der andere Drehschieber 12 oder 11 gerade öffnet. In der gezeigten Stellung ist der Steuerkanal 14 gerade offen und der Steuerkanal 15, demgegenüber um 90 ° verdreht, geschlossen. An die beiden Enden des Verteilerkanals 2 schließen sich Spritzdüsen 17 an, die an einer Formaufspannplatte 18 angeordnet sind und über die entsprechend abwechselnd der Schmelzefluss der Kunststoffschmelze in die Spritzform gefördert wird. Die Charakteristik der Pulse bzw. Schwingungen der Schmelzestränge wird einerseits durch die Art des Steuerkanals 14 und 15 bestimmt und andererseits vom Vordruck im Druckkanal 1, der Art des Kunststoffes und nicht zuletzt der Frequenz bestimmenden Drehzahl der Drehschieber 11, 12.

## Patentansprüche

1. Verfahren zur Verarbeitung von schmelzbaren Materialien wie thermoplastischen Kunststoffen oder dergleichen, bei welchen zur Erstellung der Formteile Stränge oder dergleichen der Schmelze unter Bildung von Bindenähten zusammengeführt werden, wobei die Schmelzestränge oder dergleichen mittels Spritzventilen mindestens abschnittsweise in Schwingung bzw. Pulsation versetzt werden, wodurch sich die Schmelzen im Bereich der Bindenähte aufgrund von Schwingungsunterschieden durchdringen und die Bindenähte an der Fügungsstelle der Schmelzestränge miteinander verbunden werden,
**dadurch gekennzeichnet,**
**dass** die die Schmelzestränge in Schwingung bzw Pulsation versetzenden Spritzventile (3, 4, 11, 12) mechanisch synchronisiert werden.

2. Verfahren nach Anspruch 1,
**dadurch gekennzeichnet,**
**dass** die Frequenz der Schwingungen größer 1 Hz beträgt.

3. Verfahren nach Anspruch 1,
**dadurch gekennzeichnet,**
**dass** die Schwingungen mittels gesteuert schließbarer bzw. zu öffnender Spritzdüsen erzeugt werden und dass die Aufsteuerzeiten im Zeitpunkt der Berührung der Schmelzestränge zueinander versetzt sind.

4. Verarbeitungsanlage zur Verarbeitung thermoplastischer Kunststoffe
- mit einer Kunststoffspritzgießmaschine
- mit einem einen Hohlraum für die Spritzform aufweisenden Spritzwerkzeug und
- mit mindestens zwei je eine Steuerung aufweisenden Spritzventilen für entsprechend in den Hohlraum mündende Spritzdüsen (17),
wobei die Spritzventile durch die Steuerung unabhängig vom Spritzdruck auf oder zu steuerbar sind und die Steuerung der einzelnen Spritzventile untereinander synchronisiert ist.
**dadurch gekennzeichnet,**
**dass** zur Synchronisierung der Steuerung die Spritzventile durch einen mechanischen Steuermechanismus (6 bis 8 und 16) miteinander verbunden sind.

5. Verarbeitungsanlage nach Anspruch 4,
**dadurch gekennzeichnet,**
**dass** die Spritzentile je mit einem verdrehbaren Ventilglied 3, 4, 11, 12) arbeiten, welche je nach Drehlage auf -und/oder zusteuern.

6. Verarbeitungsanlage nach Anspruch 4 oder 5
**dadurch gekennzeichnet,**
**dass** die einzelnen Ventildrehglieder (3, 4, 11, 12) zueinander drehsynchronisiert sind.

7. Verarbeitungsanlage nach einem der Ansprüche 4 bis 6
**dadurch gekennzeichnet,**
**dass** die Drehsynchronisation über ein an den Ventildrehgliedern (3, 4, 11, 12) angreifendes Zahngetriebe (5 bis 8, 16) erfolgt.

8. Verarbeitungsanlage nach einem der Ansprüche 4 bis 7
**dadurch gekennzeichnet,**
**dass** die Ventildrehglieder (3, 4, 11, 12) über einen Motor rotierend angetrieben werden.

9. Verarbeitungsanlage nach einem der Ansprüche 4 bis 8 **dadurch gekennzeichnet**,
das die Ventildrehglieder (3, 4, 11, 12) zur Steuerung des Schmelzestranges Schrägringnuten (9, 10) auf ihrer Mantelfläche aufweisen, welche mit der Schmelzenförderung dienenden Bohrungen 2 im Ventilgehäuse zusammenwirken.

## Claims

1. A method for processing meltable materials such as thermoplastics or similar, in which strands of the melt or similar are brought together to produce the mouldings, with the formation of bonding seams,
wherein the melt strands or similar are caused to vibrate or pulsate, at least in sections, by means of injection valves, whereby the melts penetrate each other in the region of the bonding seams due to vibration differences, and the bonding seams are connected to each other at the point where the melt strands join, **characterised in that** the injection valves (3, 4, 11, 12) causing the melt strands to vibrate or pulsate are mechanically synchronised.

2. The method according to Claim 1, **characterised in that** the frequency of the vibrations is greater than 1 Hz.

3. The method according to Claim 1, **characterised in that** the vibrations are generated by means of injection moulding nozzles that can be closed or opened in a controlled manner, and **in that** the opening times are out of synchronism with each other at the moment of contact of the melt strands.

4. A processing plant for processing thermoplastics
- with a plastic injection moulding machine
- with an injection moulding die having a cavity for the injection mould, and
- with at least two injection valves each having a control system for injection moulding nozzles (17) opening correspondingly into the cavity,
wherein the injection valves can be opened or closed by the control system regardless of the injection pressure, and the control of the individual injection valves in relation to each other is synchronised,
**characterised in that** the injection valves are connected to each other by a mechanical control mechanism (6 to 8 and 16) for synchronising the control.

5. The processing plant according to Claim 4, **characterised in that** the injection valves each operate with a rotary valve element (3, 4, 11, 12) which can be opened and/or closed according to the position of rotation.

6. The processing plant according to Claim 4 or 5, **characterised in that** the individual rotary valve elements (3, 4, 11, 12) are synchronised with each other in terms of their rotation.

7. The processing plant according to any one of Claims 4 to 6, **characterised in that** the rotation synchronisation is carried out by means of a toothed gear (5 to 8, 16) engaging in the rotary valve elements (3, 4, 11, 12).

8. The processing plant according to any one of Claims 4 to 7, **characterised in that** the rotary valve elements (3, 4, 11, 12) are rotatably driven by a motor.

9. The processing plant according to any one of Claims 4 to 8, **characterised in that** the rotary valve elements (3, 4, 11, 12) have skewed annular grooves (9, 10) for controlling the melt strand on its surface area which interact with the holes 2 in the valve housing serving to convey the melt.

## Revendications

1. Procédé de traitement de matériaux fusibles comme des matières plastiques thermoplastiques et similaires, dans lesquels, pour réaliser les pièces moulées, on regroupe des barres ou similaires de la coulée en formant des cordons de jonction, tandis que les barres de coulée ou similaires, à l'aide de soupapes d'injection, sont amenées du moins par endroits à vibrer ou à pulser, ce qui a pour effet que les coulées s'entremêlent au niveau des cordons de jonction en raison des différences de vibration et que les cordons de jonction sont reliés les uns aux autres au point de jonction des barres de coulée, **caractérisé en ce que** les soupapes d'injection (3, 4, 11, 12) amenant les barres de coulée à vibrer ou pulser sont synchronisées mécaniquement.

2. Procédé selon la revendication 1, **caractérisé en ce que** la fréquence des vibrations est supérieure à 1 Hz.

3. Procédé selon la revendication 1, **caractérisé en ce que** les vibrations sont générées au moyen de buses d'injection pouvant être fermées ou ouvertes de manière contrôlée et que les temps de commande sont communiqués au moment du contact entre les barres de coulée.

4. Installation de traitement équipée
- d'une machine de moulage par injection de matière plastique,
- d'un outillage d'injection comportant une cavité pour le moule d'injection et
- d'au moins deux soupapes d'injection présentant chacune une commande pour les buses d'injection (17) débouchant en conséquence dans la cavité,
dans laquelle les soupapes d'injection peuvent être commandées indépendamment de la pression d'injection et la commande des différentes soupapes d'injection entre elles est synchronisée,
**caractérisée en ce que**, pour synchroniser la commande, les soupapes d'injection sont reliées entre elles par un mécanisme de commande mécanique (6 à 8 et 16)

5. Installation de traitement selon la revendication 4, **caractérisée en ce que** les soupapes d'injection fonctionnent chacune à l'aide d'un élément de soupape rotatoire (11, 12) qui les commande en fonction de leur position de rotation.

6. Installation de traitement selon la revendication 4 ou 5, **caractérisée en ce que** les différents éléments de soupape rotatoire (3, 4, 11, 12) sont synchronisés en rotation les uns par rapport aux autres.

7. Installation de traitement selon une des revendications 4 à 6, **caractérisée en ce que** la synchronisation en rotation est faite au moyen d'engrenages (5 à 8, 16) s'engrenant sur les éléments de soupapes rotatoires (3 , 4, 11, 12).

8. Installation de traitement selon une des revendications 4 à 6, **caractérisée en ce que** les éléments de soupapes rotatoires (3 , 4, 11, 12) sont entraînés en rotation par un moteur.

9. Installation de traitement selon une des revendications 4 à 8, **caractérisée en ce que** les éléments de soupapes rotatoires (3, 4, 11, 12), pour commander la barre de coulée, présentent sur leur surface de chemise des rainures annulaires obliques (9, 10) qui coopèrent avec les alésages 2 servant au convoyage de la coulée dans le boîtier à soupapes.
